# EUROPEAN PATENT APPLICATION

(11) **EP 1 596 308 A1**
(43) Date of publication of application: **16.11.2005**
(21) Application number: 04710998.8
(22) Date of filing: 13.02.2004
(51) Int. Cl.: G06F 15/00, G06F 17/60, G06F 9/50

(54) **METHOD FOR MANAGING DISTRIBUTED SYSTEM AND DISTRIBUTED COMPUTER MANAGING SYSTEM**

(30) Priority: 17.02.2003 JP 2003038302
(71) Applicant: MATSUSHITA ELECTRIC INDUSTRIAL CO., LTD., Kadoma-shi, Osaka 571-8501 (JP)
(72) Inventor: TANAKA, Katsuyoshi, Kanagawa 224-0016 (JP); KAJIMOTO, Yasuhiko, Hyogo 669-2231 (JP)
(74) Representative: Grünecker, Kinkeldey, Stockmair & Schwanhäusser Anwaltssozietät
(86) International application number: PCT/JP2004/001548
(87) International publication number: WO 2004/072857

(57) **Abstract**

The object of the invention is to enter a job in accordance with the use ratio of a distributed computer system set by the manager of an organization within the range of an assigned authority.

The distributed computer management system of the invention includes a PCU resource allocation setting feature for setting the use ratio of CPU resources per project, a business application allocation setting feature for setting the number of applications used for operations per project, a queue priority setting feature for setting the priorities of business applications used, a queue information configuration feature for setting or changing the information such as the memory usage required to execute a business application, a user information configuration feature for registering or deleting users, and a feature for checking the adequacy of values set by the user.

## Description

### <Technical Field>

The present invention relates to a method for managing a distributed computer system in the computer system which integrates a plurality of computers (servers) distributed on a network, and in particular to a method for setting a computer use ratio necessary for the user to execute a job.

### <Background Technology>

In today' s corporate activities, all companies use some types of computer systems. The trend has a background that companies are introducing newer computer systems and mechanisms in order to streamline their operations. As a result, companies are involved in keener competition. Today, in every aspect of corporate activities, companies cannot defeat their competitors or survive the business rate race unless they have completed processing by a predetermined deadline in some operations, with some delay in other operations if necessary, and put into market new products or services earlier than the competitors.

In order to complete operations in every aspect of corporate activities by the deadline, the companies have thrown a lot of management resources to implement distributed computer systems where a plurality of computers (servers) are interconnected via large-scale local area networks or wide area networks. Especially in recent years, a large number of corporate activities efficiently utilizing a large-scale distributed computer system, such as biotechnology and analysis of genomes, have been reported.

There is known a related art method for determining the job distribution based on the consumption of each computer resource at job activation as a method for efficiently utilizing a large-scale distributed computer system (refer to Japanese Patent Laid-Open No. 11406/1998). There is also known a method for predicting the volume of server resource consumed by jobs to be executed and distributing the jobs so that the sum of the server resource consumed by the jobs will not exceed the total resource held by the server (refer to Japanese Patent Laid-Open No. 19864/1998).

While it is possible to some extent to efficiently utilize a large-scale distributed computer system by using such a job execution method, the method cannot support a case where a particular operation is given the first priority in execution. As a method for implementing this feature, many companies introduce and utilize distributed processing tools available on the market (refer to LSF Administrator's Guide Version 4.2 June 2001. Platform Computing Inc., Sun Grid Engine 5.3 and Sun Grid Engine, Enterprise Edition 5.3 Reference Manual, Sun Microsystems Inc., and Sun Grid Engine, Enterprise Edition 5.3 Administration and User's Guide, Sun Microsystems Inc.).

In the related art technology, as mentioned above, in case a distribute processing tool available on the market is used to determine that a particular operation should be given the first priority based on the business operator's decision, it is possible to utilize the resources of a large-scale distributed computer system to the operation among others. However, this operation method has three problems.

The first problem is that, in the business situation or schedule changing from moment to moment, in case the business operator has determined that a particular operation should be given the first priority, a state may take place where a rapid change to the operation form of a distributed computer system is impossible.

In case the business operator has determined that a particular operation should be given the first priority, the administrator of the distributed computer system uses a distributed processing tool to change the setting so that the resources of the distributed computers will be used on the first priority basis. As a result, a department which is in charge of a particular operation can occupy for example 50 percent of the computer resources of the distributed computer system.

In the related art, such a particular change to the setting was made by the administrator of the distributed computer system, not directly by the user. The reason is that the setting change method can change the setting of the entire distributed computer system and the use ratio of the other departments can be change freely. Thus, in case the user can directly change the setting, the user may make setting so that his/her department will be given the first priority.

That is, when the user directly changes the setting, the intention of the business operator maybe totally ignored. Thus, in order to avoid direct manipulation by the user, the system administrator of the distributed computer system manipulates the system. Such an operation scheme can sometimes fail to catch up with the business situations or schedule changing from moment to moment.

The second problem is that it is impossible to make operation setting of the distributed computer system in accordance with the authority of corporate organization layers. Typically, in a corporate organization, layers are organized in units of particular operation fields. Each organization unit determines various matters which occurs in pursuit of operations and manages matters. In this way, the corporate organization is grouped into layers and the manager of a particular operation field is in charge of the operation based on his/her own authority.

A distributed computer system used to pursuit operations is shared by all staff members. Thus, a determination to use the distributed computer system in a higher priority than others cannot be made by the manger of a particular operation, but should be made by the business operator without exception. In this way, the distributed computer system cannot be operated in accordance with the authority of each corporate organization layer.

The third problem is that the system administration man-hours are getting larger because the administrator of the distributed computer system manually addresses the system operation in order to solve the two problems.

The invention solves the foregoing related art problems and aims at providing a method for managing a distributed computer system which, in a computer system integrating a plurality of computers (serves) distributed on a network, gives the operation manager of a department as a representative user an authority to change the setting of use ratio of the distributed computer system without giving the manager an authority to change the use ratio of the distributed computer system occupied by other departments.

In order to solve the second problem, the invention aims at providing a distributed computer system which sets the operation manager as a representative user per corporate organization layer or group, gives each operation manager an authority to change the setting of use ratio of the distributed computer system, the authority being consistent with the operation pursuit form in the corporate organizations, without giving the manager an authority to change the use ratio of the distributed computer system occupied by other departments.

In order to solve the third problem, the invention aims at providing a method for managing a distributed computer system which transfers an authority to make operation setting to the manager of each business department to prevent an increase in the man-hours of the system administrator, instead of a form where the system administrator of a distributed computer system is in charge of all operation settings.

### <Disclosure of the Invention>

In order to attain the object, the first aspect of the invention provides a method for managing a distributed computer system where a plurality of computers are interconnected for integrated operation, wherein the use ratio of computer resources is set to a project using the distributed computer system in accordance with the authority given to a user of the distributed computer system.

The second aspect of the invention provides a method for managing a distributed computer system where a plurality of computers are interconnected for integrated operation, wherein the number of simultaneously available application tools is set to a project using the distributed computer system in accordance with the authority given to a user of the distributed computer system.

The third aspect of the invention provides a method for managing a distributed computer system where a plurality of computers are interconnected for integrated operation, wherein the priorities of the applications tools used are set to a project using the distributed computer system in accordance with the authority given to a user of the distributed computer system.

The fourth aspect of the invention provides a method for managing a distributed computer system where a plurality of computers are interconnected for integrated operation, wherein the execution environment of the applications tools used is set to a project using the distributed computer system in accordance with the authority given to a user of the distributed computer system.

The fifth aspect of the invention provides the method for managing a distributed computer system according to the third or fourth aspect, wherein the adequacy of the priority or execution environment of the applications tools used in the overall environment is checked before entering a job, and in case the adequacy is determined to be absent, a predetermined set value is forcibly restored and the job is entered.

The sixth aspect of the invention provides a method for managing a distributed computer system where a plurality of computers are interconnected for integrated operation, wherein the names of users involved in a project are registered or deleted concerning a project using the distributed computer system in accordance with the authority given to a user of the distributed computer system.

The seventh aspect of the invention provides the method for managing a distributed computer system according to any one of the first through sixth aspects, wherein the authority given to the user is managed in correspondence with the organization layer of the user of the distributed computer system and a organization layer or a project using the distributed computer system belongs to the same layer to which the user belongs or a lower layer.

The eighth aspect of the invention provides a distributed computer management system which executes the method for managing a distributed computer system according to any one of the first through seventh aspects.

With the above configuration, the manager of an organization layer to which the user belongs sets for each project the use ratio of computer resources, the number of simultaneously available application tools, the priorities of the applications tools used, and the execution environment of the applications tools used, checks the adequacy of these set values, and register or delete the user names involved in the project, thereby performing operation which promptly responds to the business situation or schedule changing from moment to moment.

An authority to perform operation setting is transferred to the manager of each organization layer. This eliminates the need for the system administrator to take charge in all operation settings, thereby preventing an increase in the man-hours of the system administrator.

In the figures, a numeral 10, 12 represents a local network area, 11 a wide area network, 21, 22 a client computer, 31, 32 a job queuing server, 41, 42 a file server, 51, 52 a server, 61 a distributed computer management system, 100 a user authentication menu, 101 an ACL attribute file, 200 a top menu, 201 a top menu attribute file, 210, 211 a step, 300 a CPU resource allocation setting feature, 301 a resource allocation file, 400 a business application allocation setting feature, 500 a queue priority setting feature, 501 a queue priority setting file, 600 a queue information configuration feature, 601 a queue information configuration file, 700 a user information configuration feature, and 701 a user information configuration file.

### <Brief Description of the Drawings>

Fig. 1 is a block diagram showing the configuration of a distributed computer system where a distributed computer management system according to an embodiment of the invention is implemented;
Fig. 2 is a functional block diagram showing the hierarchy of the user interface feature in a distributed computer system according to an embodiment of the invention;
Fig. 3 is a flowchart of a procedure for processing a user authentication menu;
Fig. 4 shows an example of anACL attribute file referenced by the user authentication menu;
Fig. 5 is a flowchart of a procedure for processing a top menu;
Fig. 6 shows an example of a top menu attribute file referenced by the top menu;
Fig. 7 shows the organization hierarchy and a display example of its resource allocation information in the CPU resource allocation setting feature;
Fig. 8 shows a display example of the resource allocation information set to a selected organization in the CPU resource allocation setting feature;
Fig. 9 shows a setting screen example in the CPU resource allocation setting feature;
Fig. 10 shows the organization hierarchy in the business application allocation setting feature and a display example of business application allocation information;
Fig. 11 shows a setting screen example in the business application allocation setting feature;
Fig. 12 shows the organization hierarchy in the queue priority setting feature and a display example of queue priority setting information;
Fig. 13 shows an example of a queue priority setting file;
Fig. 14 shows a setting screen example in the queue priority setting feature;
Fig. 15 shows an example of a queue information configuration file; and
Fig. 16 shows an example of a screen for performing user information configuration.

### <Best Mode for Carrying Out the Invention>

Embodiments of the invention will be described referring to the drawings.

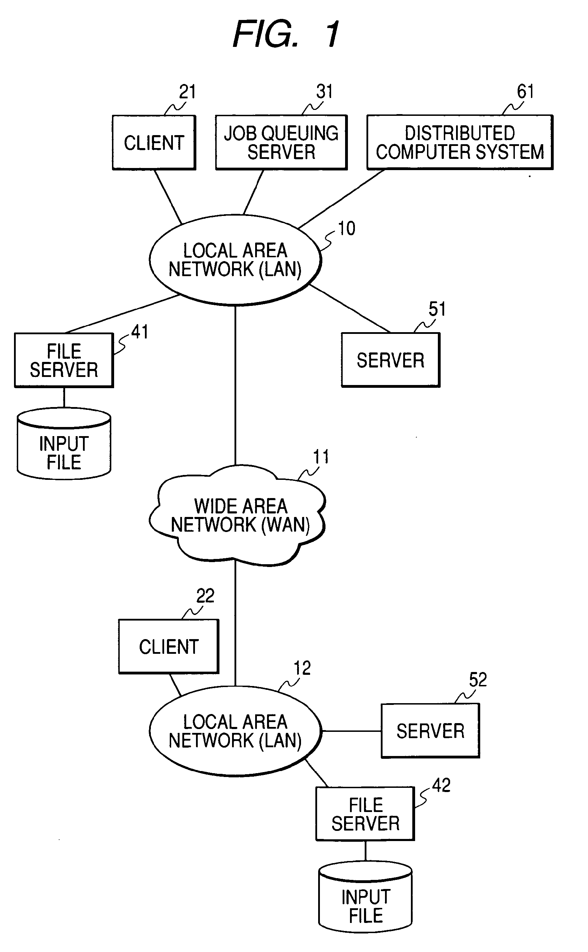

Fig. 1 is a block diagram showing the configuration of a distributed computer system where a distributed computer management system according to an embodiment of the invention is implemented.

In Fig. 1, a client 21, 22 is a computer to which a job is entered, a job queuing server 31, 32 is a computer which queues the job executed by the user, searches for a server capable of optimally executing a job and executes the job, a file server 41, 42 is a computer which stores an input file and an application program used by a job, a server 51, 52 is a computer for executing a job, 61 a computer which mounts a distributed computer management system, all these components interconnected via a local area network 10, 12 and a wide area network 11.

A client 21, 22, a job queuing server 31, 32, a file sever 41, 42, a server 51, 52, and a computer 61 are respectively computers such as a personal computer or a workstation.

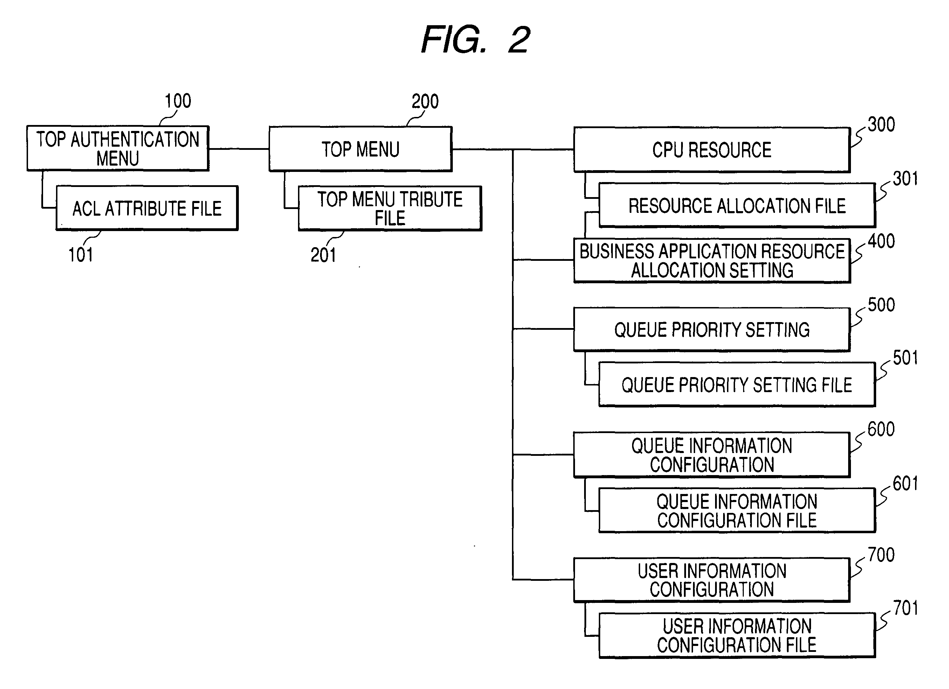

Fig. 2 is a functional block diagram showing the hierarchy of the user interface feature in a distributed computer system according to an embodiment of the invention. The user interface feature comprises a user authentication menu 100, a top menu 200, a CPU resource allocation setting feature 300, a business application allocation setting feature 400, a queue priority setting feature 500, a queue information configuration feature 600, a user information configuration feature 700, and a feature for checking the adequacy of a value set by the user.

From each user interface feature are referenced an ACL attribute file 101, a top menu attribute file 201, a resource allocation file 301, a queue priority setting file 501, a queue information configuration file 601, and a user information configuration file 701.

The user authentication menu 100 is a feature which identifies the user and determines the use authority of a user in a distributed computer management system. When the user enters an identification number such as an employee number which the user owns inherently, the organization the user belongs to and the authority to change the setting of a distributed computer system owned by the user are uniquely identified. The authority given to the user is associated with an organization layer or group so that it will match the authority concerning pursuit of operation in a corporate organization.

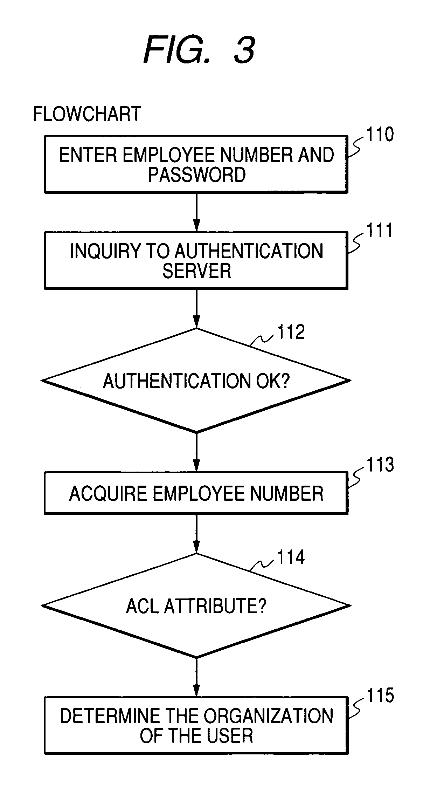

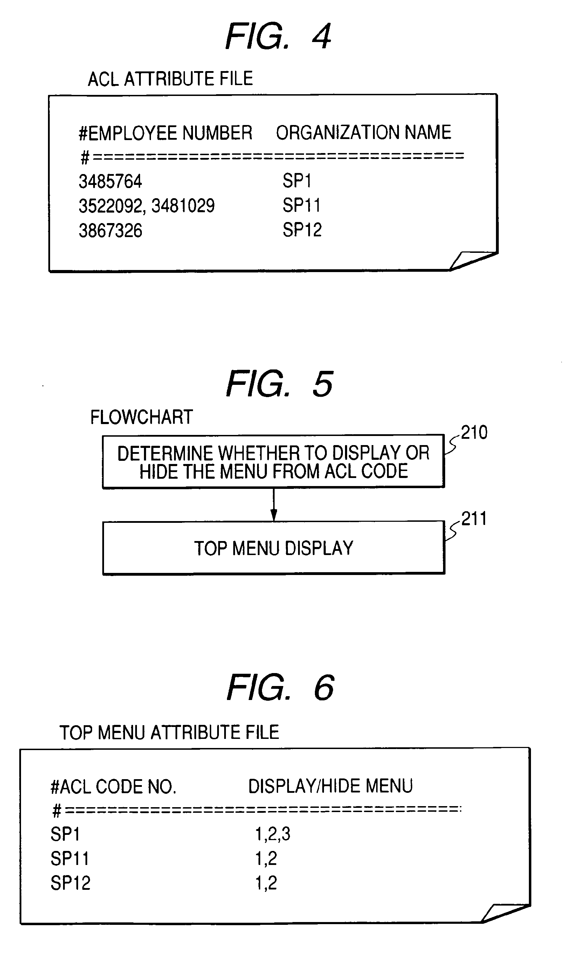

Fig. 3 is a flowchart of a procedure for processing a user authentication menu. Fig. 4 shows an example of an ACL attribute file referenced by the user authentication menu 100. In Fig. 3, the use is requested to enter an employee number and a password in step 110 and a query about the personal data is transmitted to an authentication server in step 111. When personal identification of the user is authenticated in step 112, the employee number is used to reference an AC attribute file 101 in step 114 to check that the employee number of the user is registered. The organization the user belongs to is determined in step 115.

The top menu 200 is a feature which sets and displays the menus available to the user. The features of which use authority is not given to the user must be excluded from this menu and hidden.

Fig. 5 is a flowchart of a procedure for processing the top menu 200. Fig. 6 shows an example of a top menu attribute file 201 referenced by the top menu 200. In Fig. 5, the ACL code of a target organization name obtained by referencing the ACL attribute file 101 by way of user authentication is used to reference the top menu attribute file 201 and whether to display or hide each user interface feature in the menu is determined in step 201, then the result is displayed in menu format in step 211.

The CPU resource allocation setting feature 300 is a feature capable of setting the use ratio of CPU as a resource of the distributed computer system in units of project as the smallest operation unit. Setting is allowed within the range of authority given to the user.

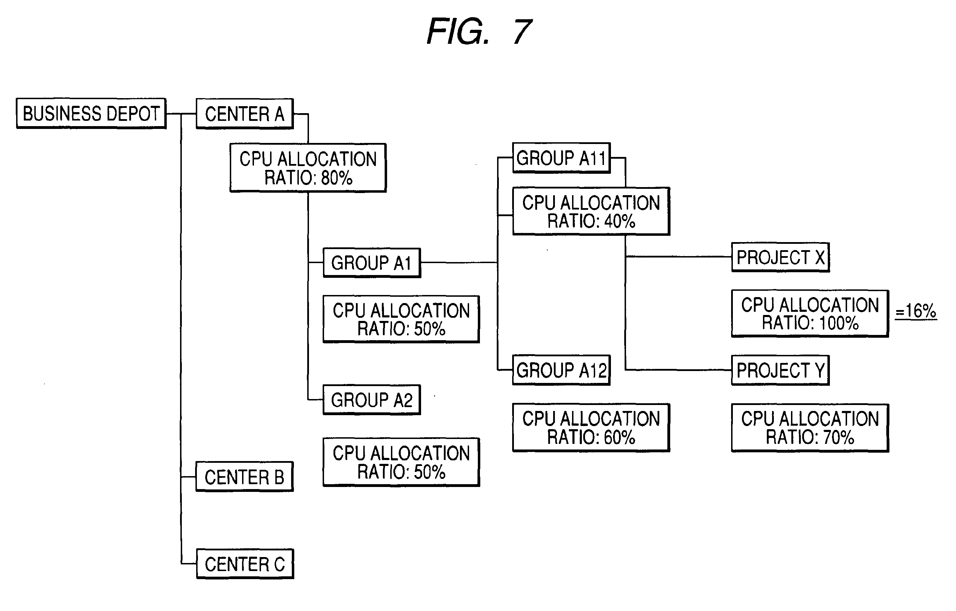

In the top menu 200, when the CPU resource allocation setting feature 300 is selected, the resource allocation file 301 is referenced and the organization hierarch and resource allocation information per organization layer are displayed. Fig. 7 shows the organization layers and a display example of its resource allocation information.

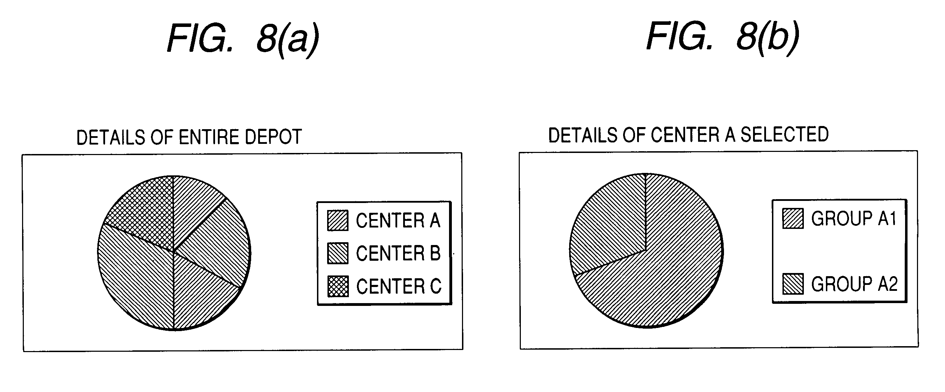

The specified resource allocation information of an organization selected from the organization hierarchy display in Fig. 7 is shown in pie chart. Fig. 8 shows a display example of the resource allocation information set to a selected organization. Fig. 8A shows the details of resource allocation on the entire depot and Fig. 8B shows the details of resource allocation assumed in case Center A is selected.

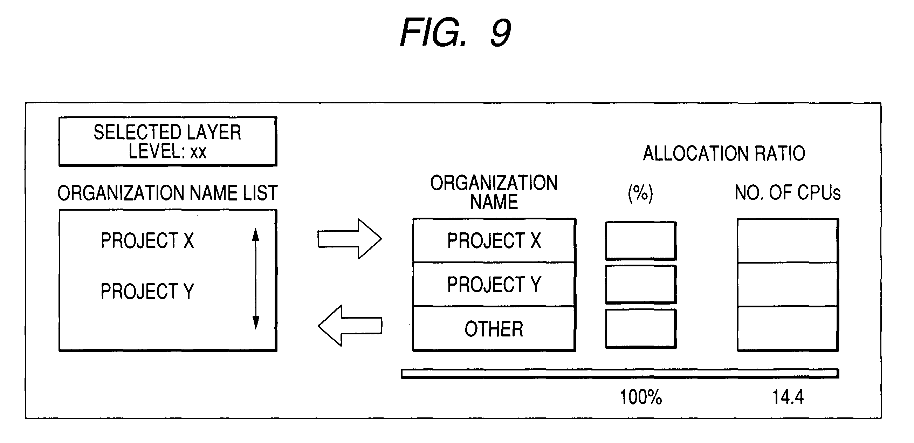

Fig. 9 shows a setting screen. Information shown in Fig. 8 is referenced and an organization layer selected from the organization hierarchy display in Fig. 7 is allocated new resources on the setting screen in Fig. 9. This setting changes the allocation of CPU resources allocated to the selected organization layer. When there remain unallocated resources out of the total 100 percent of the CPU resources, the ratio is dynamically displayed in the "remaining" field. The number of CPUs and the CPU resource allocation are calculated and displayed.

The business application allocation setting feature 400 is a feature for setting the number of applications used for operations per project as the smallest operation unit. The business application can be set to a project layer alone. Setting is allowed within the range of authority given to the user.

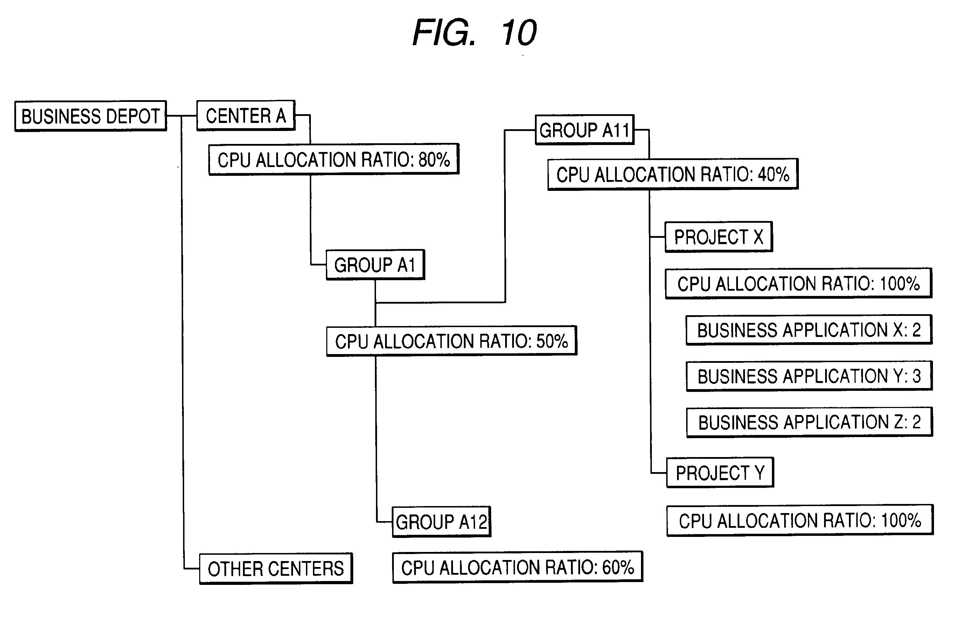

When the business application allocation setting feature 400 is selected, the resource allocation file 301 is referenced to create a tree of business application allocation information in the organization hierarchy. Fig. 10 shows the organization hierarchy and a display example of business application allocation information. In Fig 10, the queue information and the number of business applications used are shown for Project X.

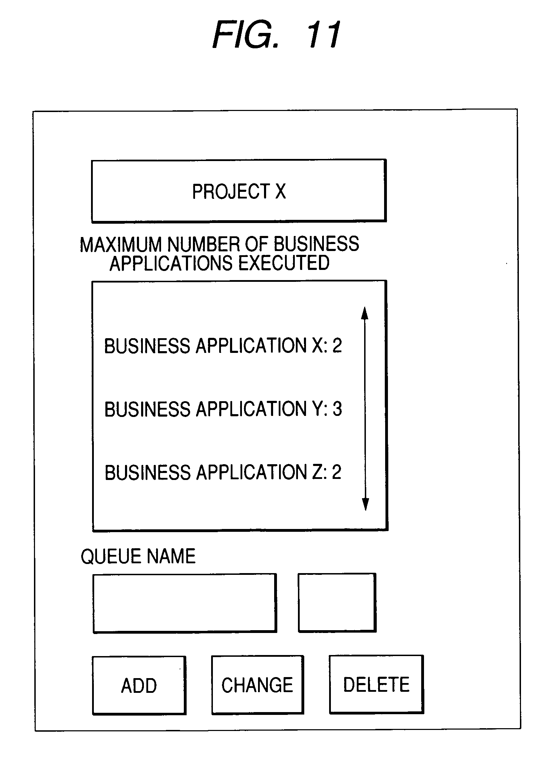

The number of business applications used for a project selected from the organization hierarchy display in Fig. 10 is set. Fig. 11 shows a business application allocation setting screen. The screen shows the maximum number of business applications executed among the currently set business applications. In the screen, a display line is selected to delete or change the current setting or add data in the input column.

When a business application used for operation is executed on the distributed computer system, an execution queue on the computer system is used to execute a job. The queue priority setting feature 500 is used by the user to set the priorities of business applications used by the local department.

Byusing this feature, it is possible to raise the execution priority of a particular business application. It is also possible to lower the execut ion priority of a particular business application. The queue priority can be set to a project layer alone. Setting is allowed within the range of authority given to the user.

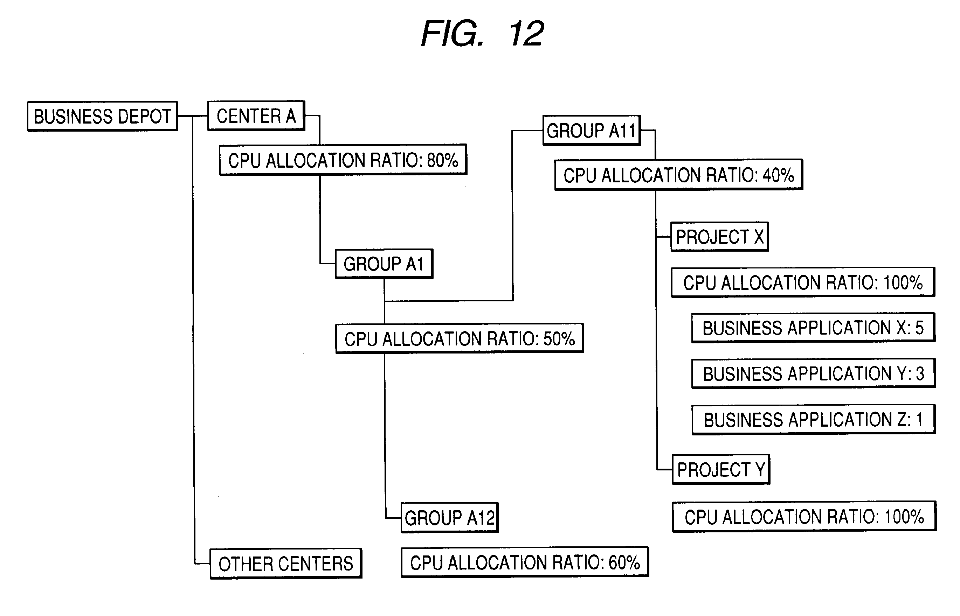

When the queue priority setting feature 500 is selected, the resource allocation file 301 and the queue priority setting file 501 are referenced to create a tree of queue priority setting information in the organization hierarchy. Fig. 12 shows the organization hierarchy and a display example of queue priority setting information. In Fig. 12, the queue information setting information is shown for Project X.

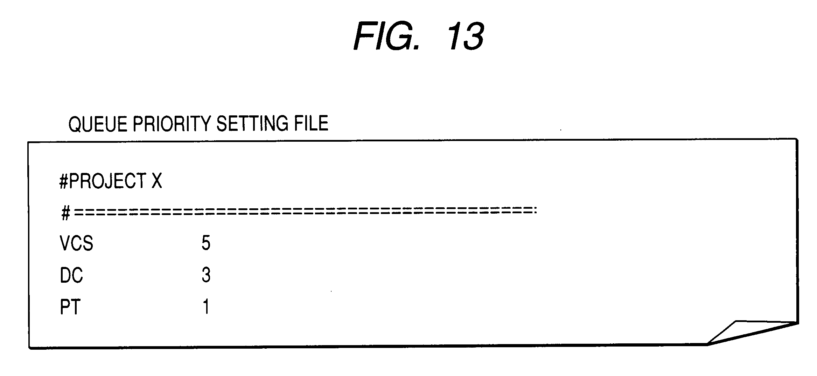

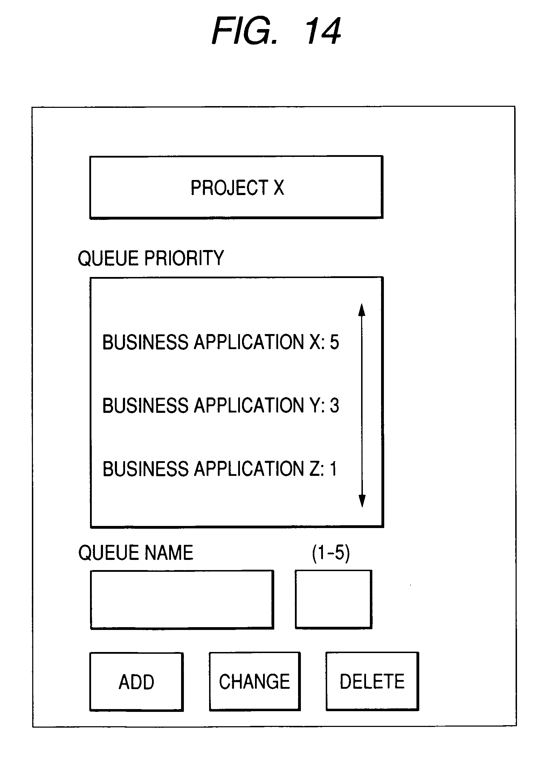

The queue priority for a project selected from the organization hierarchy display in Fig. 12 is set. Fig. 13 shows an example of the queue priority setting file 501. Fig. 14 shows a queue priority setting screen. In the screen of Fig. 14 is shown the queue priority for currently set queue names. In the screen, a display line is selected to delete or change the current setting or add data in the input column.

The queue configuration feature 600 is a feature which allows the user to set or change the information such as the memory usage required to execute a business application. With this feature, it is possible to specify the physical memory volume of the computer on which a business application is executed, OS version and job execution mode.

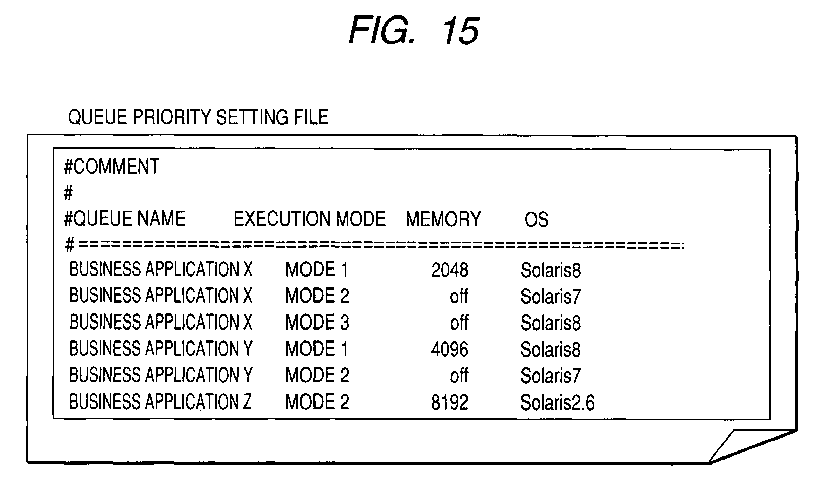

Fig. 15 shows an example of the queue information configuration file 601 to which the information set by the queue information configuration information 600 is input. The queue information configuration file 601 is created per project. Editing of the queue information configuration file 601 is made by using a general text editor.

The user information configuration feature 700 is used to register a new user. Even in case a user who belongs to a specific project is moved to another project or deleted, this feature is used to change the attributes of the user who belongs to the project. User information configuration can be registered to a project layer alone.

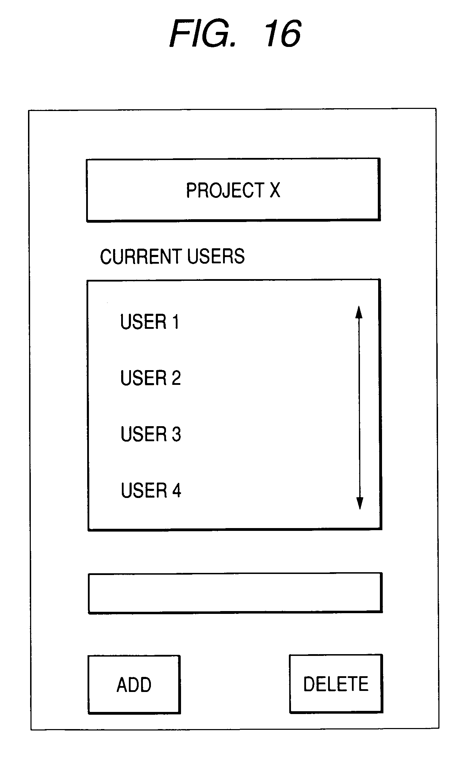

Fig. 16 is a screen for performing user information configuration. The screen displays the current content of the information configuration file 701. In the screen, a display line is selected to delete or change the current setting or add data in the input column.

Further, a feature is provided to check the adequacy of the queue priority and queue information configuration set per user in the overall environment before entering a job. This feature checks the adequacy of values set by the user. In case it is determined that the adequacy is not found the data is forcibly changed to the setting specified by the system administrator before a job is entered.

By acquiring the job entry user information based on the organization hierarchy, setting the resource use conditions and queue priority for job execution per job-entry user, and performing resource allocation by organization layer, it is possible to enter a job into a distributed computer system in accordance with the use ratio of the distributed computer system set by the manager of the corporate organization to which the user belongs.

While the invention has been described in detail in terms of specific embodiments, those skilled in the art will recognize that various changes and modifications can be made in it without departing from the spirit and scope thereof.

The invention is based on Japanese Patent Application No. 2003-038302 filed February 17, 2003, the disclosure of which is incorporated herein by reference

### <Industrial Applicability>

As mentioned hereinabove, according to the invention, the manager of an organization layer to which the user belongs can set the use ratio of the computer resources, priorities of application tools used and execution environment on a per project basis. This allows operation of a distributed computer system which promptly responds to the business situation or schedule changing from moment to moment.

According to the invention, an authority to set operation is transferred to the manager of each organization layer. This eliminates the need for the system administrator to take charge in all operation settings, thereby preventing an increase in the man-hours of the system administrator.

## Claims

1. A method for managing a distributed computer system where a plurality of computers are interconnected for integrated operation, wherein the use ratio of computer resources is set to a project using said distributed computer system in accordance with the authority given to a user of said distributed computer system.

2. A method for managing a distributed computer system where a plurality of computers are interconnected for integrated operation, wherein the number of simultaneously available application tools is set to a project using said distributed computer system in accordance with the authority given to a user of said distributed computer system.

3. A method for managing a distributed computer system where a plurality of computers are interconnected for integrated operation, wherein the priorities of the applications tools used are set to a project using said distributed computer system in accordance with the authority given to a user of said distributed computer system.

4. A method for managing a distributed computer system where a plurality of computers are interconnected for integrated operation, wherein the execution environment of the applications tools used is set to a project using said distributed computer system in accordance with the authority given to a user of said distributed computer system.

5. The method for managing a distributed computer system according to claim 3 or 4, wherein the adequacy of the priority or execution environment of the applications tools used in the overall environment is checked before entering a job, and in case the adequacy is determined to be absent, a predetermined set value is forcibly restored and the job is entered.

6. A method for managing a distributed computer system where a plurality of computers are interconnected for integrated operation, wherein the names of users involved in a project are registered or deleted concerning a project using said distributed computer system in accordance with the authority given to a user of said distributed computer system.

7. The method for managing a distributed computer system according to any one of claim 1 through claim 6, wherein the authority given to said user is managed in correspondence with the organization layer of the user of said distributed computer system and a project using said distributed computer system belongs to the same layer to which said user belongs or a lower layer.

8. A distributed computer management system which executes the method for managing a distributed computer system according to any one of claims 1 through 7.
